# EUROPÄISCHE PATENTSCHRIFT

(11) **EP 1 396 062 B1**
(45) Veröffentlichungstag und Bekanntmachung des Hinweises auf die Patenterteilung: **25.07.2012**
(21) Anmeldenummer: 02740342.7
(22) Anmeldetag: 11.05.2002
(51) Int. Cl.: H02J 7/00

(54) **VERPOLSCHUTZ FÜR ENERGIEQUELLEN**
POLARITY REVERSAL PROTECTION CIRCUIT FOR ENERGY SOURCES
PROTECTION CONTRE L'INVERSION DE POLARITE POUR SOURCES D'ENERGIE

(30) Priorität: 26.05.2001 DE 10125828
(43) Veröffentlichungstag der Anmeldung: 10.03.2004
(73) Patentinhaber: ROBERT BOSCH GMBH, 70442 Stuttgart (DE)
(72) Erfinder: HAUENSTEIN, Henning, 72762 Reutlingen (DE); SPITZ, Richard, 72766 Reutlingen (DE); ERNST, Stephan, 73760 Ostfildern (DE); HENKEL, Achim, 72766 Reutlingen (DE)
(86) Internationale Anmeldenummer: PCT/DE2002/001707
(87) Internationale Veröffentlichungsnummer: WO 2002/097943

(56) Entgegenhaltungen:
- FR-A- 2 456 412

## Beschreibung

### Stand der Technik

Die Erfindung betrifft einen Verpolschutz für Energiequellen, insbesondere für Autobatterien, der zwischen eine Energiequelle und mindestens einen Verbraucher und/oder mindestens einen Generator geschaltet wird.

Ein derartiger Verpolschutz kann grundsätzlich in Verbindung mit Energiequellen für unterschiedlichste Anwendungen eingesetzt werden. Die Funktionsweise und Vorteile eines solchen Verpolschutzes werden nachfolgend am Beispiel einer in der Kraftfahrzeugtechnik verwendeten Energiequelle erläutert, nämlich einer Autobatterie bzw. einer die Autobatterie zeitweise ersetzenden Energiequelle. Die Autobatterie wird in der Regel erst direkt vor in Betriebnahme des Kraftfahrzeugs eingebaut und an das Bordnetz angeschlossen, so dass sie einerseits mehrere Verbraucher mit Energie versorgen kann und andererseits über einen Generator, die Lichtmaschine, immer wieder aufgeladen wird. Während der Fahrzeugherstellung, der Fahrzeugprüfung und auch während des Transports wird nur im Bedarfsfall eine fremde Energiequelle an das Bordnetz angeschlossen, die dann kurzzeitig die Funktion der Autobatterie erfüllt. Aber auch nach Inbetriebnahme eines Kraftfahrzeugs kann es erforderlich sein, die Autobatterie kurzzeitig mit einer fremden Energiequelle zu überbrücken, beispielsweise wenn Starthilfe gegeben wird.

In all diesen Fällen werden in der Praxis immer wieder die Pole der jeweils anzuschließenden Energiequelle vertauscht, was als Verpolung bezeichnet wird. Dabei kann es beispielsweise zu einer Überhitzung von Teilen des Generators und sogar zu einer Zerstörung des Generators kommen. Durch die lokale Hitzeentwicklung können außerdem umliegende Systeme des Bordnetzes zerstört werden. Insgesamt stellt der Verpolfall eine Gefahr für die Sicherheit aller angeschlossenen Systeme und auch der Energiequelle selbst dar.

Das Dokument FR 2 456 412 offenbart die Mezkmale des Oberbegriffes des Anspruchs 1.

### Vorteile der Erfindung

Die vorliegende Erfindung betrifft einem Vernolschutz gemäβ Anspruch 1 Mit der vorliegenden Erfindung wird ein Verpolschutz für Energiequellen vorgeschlagen, der verhindert, dass der Verpolstrom durch die angeschlossenen Systeme fließt, so dass diese Systeme im Verpolfall keinen Schaden nehmen können.

Dazu umfasst der eingangs genannte Verpolschutz erfindungsgemäß Mittel zum Erkennen, ob die beiden Pole der Energiequelle an die entsprechenden Anschlüsse des Verbrauchers bzw. Generators angeschlossen sind, und Mittel zum Abkoppeln der Energiequelle vom Verbraucher bzw. vom Generator, wenn die beiden Pole der Energiequelle beim Anschluss an den Verbraucher bzw. Generator vertauscht worden sind.

Der erfindungsgemäße Verpolschutz verhindert in Verbindung mit einer Autobatterie bzw. einer die Autobatterie zeitweise ersetzenden Energiequelle eine durch Verpolung bedingte Überhitzung des Generators. Das Risiko eines schwerwiegenden Folgeschadens für den Gleichrichter der Lichtmaschine wird so minimiert. Außerdem verhindert der erfindungsgemäße Verpolschutz auch eine Schädigung der übrigen am Bordnetz hängenden Systeme sowie der Autobatterie bzw. der Energiequelle selbst. Dadurch können Folgekosten, beispielsweise bedingt durch aufwendige Fehlersuche nach einer Verpolung, eingespart werden.

Grundsätzlich gibt es verschiedene Möglichkeiten für die Realisierung des erfindungsgemäßen Verpolschutzes und insbesondere für die Mittel zum Abkoppeln der Energiequelle vom Verbraucher bzw. vom Generator, wenn die beiden Pole der Energiequelle beim Anschluss an den Verbraucher bzw. Generator vertauscht worden sind. Dieser Fall wird im Folgenden als erster Verpolfall bezeichnet.

Erfindungsgemäß ist ein Verpolpfad vorgesehen, der die beiden Pole der Energiequelle über mindestens einen Schalter und mindestens eine Sicherung miteinander verbindet. Die Sicherung ist außerdem in der Verbindung zwischen einem der Pole der Energiequelle und dem entsprechenden Anschluss des Verbrauchers bzw. des Generators angeordnet. Der Schalter wird durch die Mittel zum Erkennen des ersten Verpolfalls angesteuert und im ersten Verpolfall geschlossen, so dass die beiden Pole der Energiequelle kurzgeschlossen werden. Dabei wird der Verpolpfad über die Sicherung aufgetrennt, wodurch die Energiequelle von den an den Verpolschutz angeschlossenen Verbrauchern und ggf. von einem angeschlossenen Generator kontrolliert abgekoppelt wird.

Erfindungsgemäß ist ein verpoltes Montieren des Verpolschutzes auf der Energiequelle unkritisch, da der Verpolschutz im Montagezustand einen Leerlauf zwischen den beiden Polen der Energiequelle, den sogenannten internen Anschlüssen, darstellt. Die von außen zugänglichen Anschlüsse der Energiequelle, die sogenannten externen Anschlüsse, sind schaltungstechnisch von den internen Anschlüssen getrennt. Zwischen jedem der externen Anschlüsse und dem entsprechenden internen Anschluss ist eine direkte Verbindungsstrecke vorgesehen. Außerdem sind die beiden internen Anschlüsse der Energiequelle über einen Kurzschlusspfad, den Verpolpfad, miteinander verbunden. Die Sicherung, die in einem Teil des Verpolpfads angeordnet ist, der gleichzeitig Teil einer direkten Verbindungsstrecke zwischen einem der internen Anschlüsse und dem entsprechenden externem Anschluss ist, dient zum einen als Eigenschutz der Energiequelle bei Kurzschluss der beiden internen Anschlüsse. Zum anderen dient die Sicherung zum Abkoppeln der Energiequelle, wodurch im Fall einer Autobatterie ein Ausgasen oder Explodieren der Batterie verhindert wird. Die Sicherung hat beispielsweise gegenüber einem power-switch den Vorteil, dass sie keine eigene Energieversorgung benötigt. Im Normalfall verursacht der Verpolpfad mit der Sicherung also keine Verlustleistung. Die Sicherung und damit der gesamte Verpolschutz ist auch bei einer nur schwach geladenen Autobatterie voll funktionsfähig.

Wie bereits erwähnt tritt in der Praxis des Öfteren die Notwendigkeit auf, eine erste Energiequelle mit einer weiteren Energiequelle zu überbrücken. So wird eine Autobatterie beispielsweise in Starthilfesituationen mit einer Fremdbatterie überbrückt. Auch in diesen Fällen besteht eine Verpolgefahr, nämlich die Gefahr, dass die Anschlüsse der weiteren Energiequelle nicht mit den entsprechenden Polen der ersten Energiequelle verbunden werden sondern beim Anschließen vertauscht werden. Dieser Fall wird im Folgenden als zweiter Verpolfall bezeichnet.

Um auch dem zweiten Verpolfall vorzubeugen, wird erfindungsgemäß ein Verpolschutz vorgeschlagen, der zwischen die erste Energiequelle und den bzw. die Verbraucher und/oder einen Generator geschaltet wird und mit mindestens einer ersten Anschlussklemme zum Anschließen der weiteren Energiequelle ausgestattet ist. Der Verpolschutz umfasst ferner Mittel zum Erkennen des zweiten Verpolfalls, also ob der dafür vorgesehene Pol der weiteren Energiequelle an die erste Anschlussklemme angeschlossen ist. Schließlich sind noch Mittel zum Abkoppeln der weiteren Energiequelle vorgesehen, wenn der zweite Verpolfall vorliegt. In einer vorteilhaften Variante dieses Verpolschutzes sind die erste Anschlussklemme und der entsprechende Pol der ersten Energiequelle einfach über einen Schalter verbunden. Dieser Schalter wird durch die Mittel zum Erkennen des zweiten Verpolfalls angesteuert, so dass er im zweiten Verpolfall geöffnet wird. Dadurch wird eine falsch angeschlossene weitere Energiequelle einfach automatisch abgekoppelt.

An dieser Stelle sei angemerkt, dass der voranstehend beschriebene, erfindungsgemäße Verpolschutz für den zweiten Verpolfall sowohl unabhängig von dem erfindungsgemäß vorgeschlagenen Verpolschutz für den ersten Verpolfall realisiert werden kann als auch in Form einer Erweiterung dieses Verpolschutzes für den ersten Verpolfall. Dies gilt auch für die nachfolgend beschriebene Variante eines erfindungsgemäßen Verpolschutzes, die ebenfalls für den zweiten Verpolfall konzipiert ist.

Erfindungsgemäß wird schließlich noch ein Verpolschutz für Energiequellen vorgeschlagen, der die Anschlüsse einer weiteren Energiequelle, die die erste Energiequelle überbrücken soll, automatisch richtig mit den Polen der ersten Energiequelle verschaltet, und zwar unabhängig davon, wie die weitere Energiequelle an den Verpolschutz angeschlossen worden ist. Dieser Verpolschutz wird ebenfalls zwischen die erste Energiequelle und den oder die Verbraucher und/oder den Generator geschaltet und umfasst eine erste und eine zweite Anschlussklemme zum Anschließen der weiteren Energiequelle. Außerdem sind Mittel zum Erkennen der Anschlusssituation vorgesehen, d.h. Mittel zum Erkennen, welcher Pol der weiteren Energiequelle an welche der beiden Anschlussklemmen angeschlossen ist. Schließlich umfasst dieser Verpolschutz noch Mittel zum automatischen Verschalten der Anschlussklemmen mit den Anschlüssen der ersten Energiequelle, so dass die Pole der weiteren Energiequelle in jedem Fall mit den entsprechenden Anschlüssen der ersten Energiequelle verbunden werden. In einer vorteilhaften Variante dieses Verpolschutzes sind die letztgenannten Mittel zum automatischen Verschalten der Anschlussklemmen in Form von Schaltern realisiert, die durch die Mittel zum Erkennen der Anschlusssituation angesteuert werden und über die die beiden Anschlussklemmen jeweils alternativ mit einem der beiden Pole der ersten Energiequelle verbindbar sind.

Sowohl die voranstehend erwähnten Mittel zum Erkennen des ersten Verpolfalls als auch die Mittel zum Erkennen des zweiten Verpolfalls als auch die Mittel zum Erkennen der Anschlusssituation umfassen in vorteilhafter Weise mindestens einen Verpoldetektor und eine Auswerteeinheit für die Messdaten des Verpoldetektors. Eine Verpolung kann z.B. über direkte oder indirekte Strommessung an einer stark bestromten Leitung des Verpolschutzes detektiert werden. Dazu kann beispielsweise ein Stromsensor und/oder ein Magnetsensor eingesetzt werden. Eine Verpolung kann aber auch mit einem Spannungssensor detektiert werden, der die Spannung an geeigneter Stelle, beispielsweise zwischen Energiequelle und Verbraucher, abgreift.

Bei Varianten des erfindungsgemäßen Verpolschutzes, die sowohl für den ersten als auch für den zweiten Verpolfall ausgelegt sind, erweist es sich als vorteilhaft, wenn die Auswertung der von den verschiedenen Verpoldetektoren erfassten Messdaten in einer gemeinsamen Auswerteeinheit erfolgt.

Die Auswerteeinheit wird in vorteilhafter Weise in Form eines integrierten Schaltkreises realisiert. Dadurch lässt sich die Reaktionszeit des Verpolschutzes so weit verkürzen, dass die Energiequelle im Verpolfall abgekoppelt wird, bevor die angeschlossenen Systeme Schaden nehmen. Zur Energieversorgung kann die Auswerteeinheit in vorteilhafter Weise an die internen Anschlüsse der Energiequelle angeschlossen werden. Im Fall eines Verpolschutzes für eine Autobatterie kann die Auswerteeinheit aber auch physisch von der Autobatterie getrennt werden und beispielsweise in eine andere Batterie-Kontrolleinheit und/oder das Motorsteuergerät integriert werden.

Beispielsweise bei extrem niedrigen Außentemperaturen kann im Fall einer Autobatterie die Aktivierung des Verpolpfades unterdrückt werden, da unter diesen Bedingungen extrem hohe Ströme zum Starten des Fahrzeugs erforderlich sind, die dann eben nicht auf eine Verpolung zurückzuführen sind. Diese Unterdrückung kann entweder in der Auswerteeinheit selbst erfolgen oder von einem externen Steuergerät über mindestens einen Signaleingang vorgegeben werden.

Als vorteilhaft erweist sich auch, wenn ein Signalgeber zum Anzeigen eines Verpolfalls vorgesehen ist, da der Fahrzeugbenutzer so die Ursache der Fehlfunktion sofort erkennen kann.

### Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die den unabhängigen Patentansprüchen nachgeordneten Patentansprüche und andererseits auf die nachfolgende Beschreibung dreier Ausführungsbeispiele der Erfindung anhand der Zeichnungen verwiesen.
- Fig. 1: zeigt das Schaltbild eines erfindungsgemäßen Verpolschutzes für eine Autobatterie, der für den ersten Verpolfall konzipiert ist,
- Fig. 2: zeigt das Schaltbild eines weiteren erfindungsgemäßen Verpolschutzes für eine Autobatterie, der sowohl für den ersten als auch für den zweiten Verpolfall konzipiert ist, und
- Fig. 3: zeigt das Schaltbild eines dritten erfindungsgemäßen Verpolschutzes für eine Autobatterie, der ebenfalls sowohl für den ersten als auch für den zweiten Verpolfall konzipiert ist.

### Beschreibung der Ausführungsbeispiele

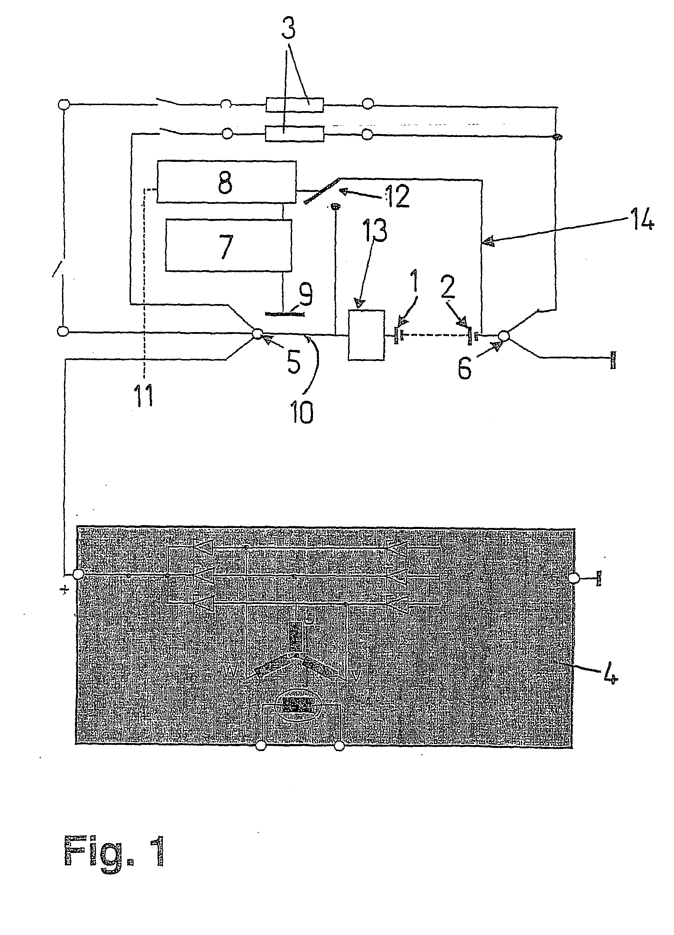

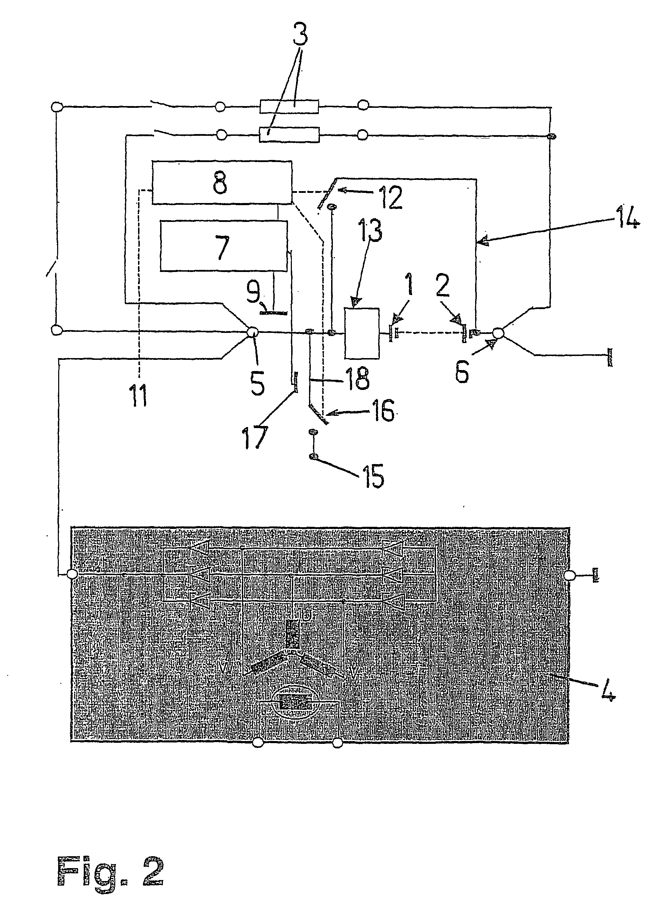

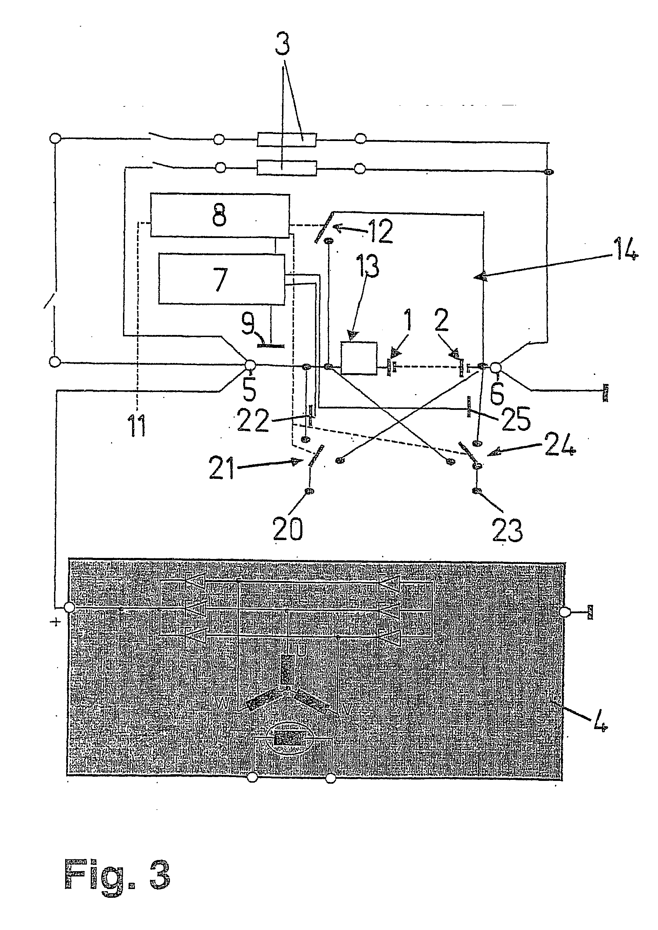

Die in Fig. 1 dargestellte Verpolschutzschaltung ist jeweils Bestandteil der Verpolschutzschaltungen, die in den Figuren 2 und 3 dargestellt sind. Die allen drei Figuren gleichen Schaltungsteile bzw. Schaltungselemente sind daher auch in allen drei Figuren mit den gleichen Bezugszeichen versehen.

Alle drei Figuren zeigen jeweils einen Verpolschutz für eine Autobatterie, von der nur die beiden Pole 1 und 2 dargestellt sind. Diese Pole 1 und 2 werden im Folgenden auch als interne Anschlüsse der Autobatterie bezeichnet. In allen drei Figuren ist der Verpolschutz bzw. die Verpolschutzschaltung zwischen die Autobatterie und zwei angeschlossene Verbraucher 3 sowie einen angeschlossenen Generator 4 geschaltet, über den die Autobatterie immer wieder aufgeladen wird.

Die in Fig. 1 dargestellte Verpolschutzschaltung realisiert eine Trennung zwischen den internen Anschlüssen 1 und 2 der Autobatterie und den von außen zugänglichen Anschlüssen der Autobatterie, an denen die Verbraucher 3 und der Generator 4 angeschlossen sind. Diese Anschlüsse werden im Folgenden auch als externe Anschlüsse 5 und 6 der Autobatterie bezeichnet.

Erfindungsgemäß umfasst die in Fig. 1 dargestellte Verpolschutzschaltung zum einen Mittel zum Erkennen, ob die beiden Pole 1 und 2 der Autobatterie an die entsprechenden Anschlüsse der Verbraucher 3 bzw. des Generators 4 angeschlossen sind. Zum anderen umfasst die Verpolschutzschaltung erfindungsgemäß Mittel zum Abkoppeln der Autobatterie von den Verbrauchern 3 und dem Generator 4, wenn die Pole 1 und 2 der Autobatterie beim Anschließen vertauscht worden sind, also im ersten Verpolfall.

Die Mittel zum Erkennen des ersten Verpolfalls umfassen im hier dargestellten Ausführungsbeispiel einen Verpoldetektor 7 und eine Auswerteeinheit 8 für die Messdaten des Verpoldetektors 7. Dieser umfasst einen Stromsensor 9 oder einen Magnetsensor, der die Stromstärke in der stark bestromten Verbindungsleitung 10 zwischen dem internen Anschluss 1 und dem externen Anschluss 5 indirekt erfasst. Die Detektion des ersten Verpolfalls kann aber auch über eine direkte Strommessung erfolgen. Die Auswerteeinheit 8 wertet die Stromstärke und/oder die Veränderung der Stromstärke aus und erkennt so, ob der erste Verpolfall vorliegt. Über einen externen Signaleingang 11 kann die Auswertung der Messdaten des Verpoldetektors 7, beispielsweise über das Motorsteuergerät, gezielt beeinflusst werden.

Zum Abkoppeln der Autobatterie ist im hier dargestellten Ausführungsbeispiel ein Verpolpfad 14 vorgesehen, der die beiden Pole 1 und 2 der Autobatterie über einen Schalter 12 und eine Sicherung 13 miteinander verbindet. Die Sicherung 13, bei der es sich einfach um eine Schmelzsicherung handeln kann, ist in der Verbindung zwischen dem internen Anschluss 1 und dem externen Anschluss 5 angeordnet. Der Schalter 12 wird über die Auswerteeinheit 8 angesteuert und im ersten Verpolfall geschlossen. Dabei werden die beiden Pole der Autobatterie kurzgeschlossen. Über die Sicherung 13 wird dadurch nicht nur der Verpolpfad 14 kontrolliert aufgetrennt sondern auch die Verbindung zwischen dem internen Anschluss 1 und dem externen Anschluss 5, wodurch die Autobatterie von den Verbrauchern 3 und dem Generator 4 abgekoppelt wird. Die Sicherung 13 dient also nicht nur als Eigenschutz für die Autobatterie sondern auch als Schutz für die an die Autobatterie angeschlossenen Systeme.

Bei einem Fremdstart, d.h. beim Starten eines Kraftfahrzeugs mit einer fremden Energiequelle, besteht ebenfalls Verpolgefahr, nämlich die Gefahr, dass die Pole der fremden Energiequelle nicht an die entsprechenden Pole der bereits eingebauten Autobatterie angeschlossen werden. Fig. 2 zeigt eine Erweiterung der in Fig. 1 dargestellten Verpolschutzschaltung, die dieser Gefahr vorbeugt. Dazu wird eine eigene Anschlussklemme 15 für den Fremdstart zur Verfügung gestellt. Diese Anschlussklemme 15 ist über einen Schalter 16 an den externen Anschluss 5 angeschlossen, an dem auch das Bordnetz, d.h. die Verbraucher 3 und der Generator 4 hängt. Im Hier dargestellten Ausführungsbeispiel ist für die Anschlussklemme 15 ein eigener Stromsensor 17 vorgesehen, der die Stromstärke in der Verbindungsleitung 18 zwischen der Anschlussklemme 15 und dem externen Anschluss 5 erfasst. Durch Auswertung dieser Messdaten mit Hilfe der Auswerteeinheit 8 kann erkannt werden, ob der dafür vorgesehene Pol der fremden Energiequelle an die Anschlussklemme 15 angeschlossen ist, d.h. hier der dem internen Anschluss 1 entsprechende Pol der fremden Energiequelle. Auch der Schalter 16 wird über die Auswerteeinheit 8 angesteuert, so dass er geöffnet wird, wenn die beiden Pole der fremden Energiequelle beim Anschluss an die Anschlussklemme 15 vertauscht worden sind, was als zweiter Verpolfall bezeichnet wird. Der Schalter 16 lässt also nur dann einen Stromfluss zu, wenn keine Verpolung vorliegt.

Fig. 3 zeigt eine Verpolschutzschaltung, die ebenfalls für den Anschluss einer fremden Energiequelle konzipiert ist und die Pole der fremden Energiequelle automatisch richtig mit den Polen der Autobatterie verschaltet. Dazu sind zwei Anschlussklemmen, nämlich eine erste Anschlussklemme 20 und eine zweite Anschlussklemme 23 zum Anschließen der fremden Energiequelle vorgesehen, mit der die Autobatterie überbrückt werden soll. Die erste Anschlussklemme 20 kann über einen ersten Schalter 21 alternativ an den externen Anschluss 5 oder den externen Anschluss 6 angeschlossen werden, während die zweite Anschlussklemme 23 über eine zweiten Schalter 24 alternativ an den externen Anschluss 6 oder den externen Anschluss 5 der Autobatterie angeschlossen werden kann. Zum Erkennen der Anschlusssituation, d.h. zum Erkennen, welcher Pol der fremden Energiequelle an welche der beiden Anschlussklemmen 20 oder 23 angeschlossen ist, umfasst der Verpoldetektor 7 im hier dargestellten Ausführungsbeispiel zwei Sensoren 22 und 25, die entsprechend dem in Fig. 2 dargestellten Stromsensor 17 angeordnet sind. Auch hier werden die Messdaten der Sensoren 22 und 25 von der Auswerteeinheit 8 ausgewertet, die die beiden Schalter 21 und 24 dann so ansteuert, dass die Pole der fremden Energiequelle in jedem Fall mit den entsprechenden Anschlüssen der Autobatterie verbunden werden.

## Patentansprüche

1. Verpolschutz für Energiequellen, insbesondere für Autobatterien, der zwischen eine erste Energiequelle und mindestens einen Verbraucher (3) und/oder mindestens einen Generator (4) geschaltet wird, umfassend
- Mittel zum Erkennen, ob die beiden Pole (1, 2) der ersten Energiequelle an die entsprechenden Anschlüsse des Verbrauchers (3) bzw. Generators (4) angeschlossen sind, und
- Mittel zum Abkoppeln der ersten Energiequelle vom Verbraucher (3) bzw. vom Generator (4) in einem ersten Vezpolfall, wenn die beiden Pole (1, 2) der ersten Energiequelle beim Anschluss an den Verbraucher (3) bzw. Generator (4) vertauscht worden sind **dadurch gekennzeichnet,**
- **dass** ein Verpolpfad (14) vorgesehen ist, der die beiden Pole (1, 2) der ersten Energiequelle über mindestens einen ersten Schalter (12) und mindestens eine Sicherung (13) miteinander verbindet,
- **dass** die Sicherung (13) in der Verbindung zwischen einem der Pole (1, 2) der ersten Energiequelle und dem entsprechenden Anschluss des Verbrauchers (3) bzw. des Generators (4) angeordnet ist und
- **dass** der erste Schalter (12) durch die Mittel zum Erkennen des ersten Verpolfalls angesteuert wird, so dass der erste Schalter (12) im ersten Verpolfall geschlossen wird und die beiden Pole (1, 2) der ersten Energiequelle kurzgeschlossen werden, wobei der Verpolpfad (14) über die Sicherung (13) aufgetrennt wird und die erste Energiequelle vom Verbraucher (3) bzw. Generator (4) abgekoppelt wird.

2. Verpolschutz für Energiequellen, insbesondere für Autobatterien, der zwischen eine erste Energiequelle und mindestens einen Verbraucher (3) und/oder mindestens einen Generator (4) geschaltet wird, nach Anspruch 1, **dadurch gekennzeichnet, dass**
- mindestens eine erste Anschlussklemme (15) zum Anschließen einer weiteren Energiequelle, mit der die erste Energiequelle überbrückt wird, vorhanden ist, und
- Mittel zum Erkennen, ob der dafür vorgesehene Pol der weiteren Energiequelle an die erste Anschlussklemme (15) angeschlossen ist, und
- Mittel zum Abkoppeln der weiteren Energiequelle in einem zweiten verpolfall, wenn die beiden Pole der weiteren Energiequelle beim Anschluss an die erste Anschlussklemme (15) vertauscht worden sind.

3. Verpolschutz nach Anspruch 2, **dadurch gekennzeichnet, dass** die erste Anschlussklemme (15) und der entsprechende Pol (1) der ersten Energiequelle über mindestens einen zweiten Schalter (16) verbunden sind und dass der zweite Schalter (16) durch die Mittel zum Erkennen des zweiten Verpolfalls angesteuert wird, so dass der zweite Schalter (16) im zweiten Verpolfall geöffnet wird.

4. Verpolschutz für Energiequellen, insbesondere für Autobatterien, der zwischen eine erste Energiequelle und mindestens einen Verbraucher (3) und/oder mindestens einen Generator (4) geschaltet wird, nach Anspruch 1, **dadurch gekennzeichnet, dass**
- eine erste und eine zweite Anschlussklemme (20, 23) zum Anschließen einer weiteren Energiequelle, mit der die erste Energiequelle überbrückt wird, vorhanden ist und
- Mittel zum Erkennen der Anschlusssituation, d.h. Mittel zum Erkennen, welcher Pol der weiteren Energiequelle an welche der beiden Anschlussklemmen (20, 23) angeschlossen ist, und
- Mittel zum automatischen Verschalten der ersten und zweiten Anschlussklemme (20, 23) mit den Anschlüssen der ersten Energiequelle, so dass die Pole der weiteren Energiequelle in jedem Fall mit den entsprechenden Polen (1, 2) der ersten Energiequelle verbunden werden.

5. Verpolschutz nach Anspruch 4, **dadurch gekennzeichnet, dass** die beiden Anschlussklemmen (20, 23) jeweils über mindestens einen Schalter (21, 24) alternativ mit einem der beiden Pole (1, 2) der ersten Energiequelle verbindbar sind und dass diese beiden Schalter (21, 24) durch die Mittel zum Erkennen der Anschlusssituation angesteuert werden .

6. Verpolschutz nach einem der Ansprüche 1 bis 5, **dadurch gekennzeichnet, dass** die Mittel zum Erkennen des ersten Verpolfalls, die Mittel zum Erkennen des zweiten Verpolfalls und/oder die Mittel zum Erkennen der Anschlusssituation mindestens einen Verpoldetektor (7) und eine Auswerteeinheit (8) für die Messdaten des Verpoldetektors (7) umfassen.

7. Verpolschutz nach Anspruch 6, **dadurch gekennzeichnet, dass** der Verpoldetektor (7) mindestens einen Stromsensor (9; 17; 22, 25) und/oder mindestens einen Magnetsensor umfasst.

8. Verpolschutz nach Anspruch 7, **dadurch gekennzeichnet, dass** der Verpoldetektor mindestens einen Spannungssensor umfasst.

9. Verpolschutz nach einem der Ansprüche 6 bis 8, **dadurch gekennzeichnet, dass** die Auswerteeinheit (8) mindestens einen externen Signaleingang (11) aufweist, über den die Auswertung der Messdaten des Verpoldetektors (7) gezielt beeinflusst werden kann.

10. Verpolschutz nach einem der Ansprüche 1 bis 9, **dadurch gekennzeichnet, dass** mindestens ein Signalgeber zum Anzeigen eines Verpolfalls vorgesehen ist.

## Claims

1. Polarity reversal protection means for energy sources, in particular for car batteries, which is connected between a first energy source and at least one load (3) and/or at least one generator (4), comprising
- means for identifying whether the two poles (1, 2) of the first energy source are connected to the corresponding connections of the load (3) or generator (4), and
- means for decoupling the first energy source from the load (3) or from the generator (4) in a first instance of polarity reversal when the two poles (1, 2) of the first energy source have been interchanged during connection to the load (3) or generator (4), **characterized**
- **in that** a polarity reversal path (14) is provided which connects the two poles (1, 2) of the first energy source to one another by means of at least a first switch (12) and at least one fuse (13),
- **in that** the fuse (13) is arranged in the connection between one of the poles (1, 2) of the first energy source and the corresponding connection of the load (3) or of the generator (4), and
- **in that** the first switch (12) is actuated by the means for identifying the first instance of polarity reversal, so that the first switch (12) is closed in the first instance of polarity reversal and the two poles (1, 2) of the first energy source are shorted, with the polarity reversal path (14) being disconnected by means of the fuse (13) and the first energy source being decoupled from the load (3) or generator (4).

2. Polarity reversal protection means for energy sources, in particular for car batteries, which is connected between a first energy source and at least one load (3) and/or at least one generator (4), according to Claim 1, **characterized in that**
- at least a first connection terminal (15) for connecting a further energy source, with which the first energy source is bridged, is provided, and
- means for identifying whether the pole of the further energy source which is provided for it is connected to the first connection terminal (15) are provided, and
- means for decoupling the further energy source in a second instance of polarity reversal when the two poles of the further energy source have been interchanged during connection to the first connection terminal (15) are provided.

3. Polarity reversal protection means according to Claim 2, **characterized in that** the first connection terminal (15) and the corresponding pole (1) of the first energy source are connected by means of at least a second switch (16), and **in that** the second switch (16) is actuated by the means for identifying the second instance of polarity reversal, so that the second switch (16) is opened in the second instance of polarity reversal.

4. Polarity reversal protection means for energy sources, in particular for car batteries, which is connected between a first energy source and at least one load (3) and/or at least one generator (4), according to Claim 1, **characterized in that**
- a first and a second connection terminal (20, 23) for connecting a further energy source with which the first energy source is bridged, are provided, and
- means for identifying the connection situation, that is to say means for identifying which pole of the further energy source is connected to which of the two connection terminals (20, 23), are provided, and
- means for automatically interconnecting the first and second connection terminals (20, 23) to the connections of the first energy source, so that the poles of the further energy source are in each case connected to the corresponding poles (1, 2) of the first energy source, are provided.

5. Polarity reversal protection means according to Claim 4, **characterized in that** the two connection terminals (20, 23) can be alternately connected to one of the two poles (1, 2) of the first energy source by means of at least one switch (21, 24) in each case, and **in that** these two switches (21, 24) are actuated by the means for identifying the connection situation.

6. Polarity reversal protection means according to one of Claims 1 to 5, **characterized in that** the means for identifying the first instance of polarity reversal, the means for identifying the second instance of polarity reversal and/or the means for identifying the connection situation comprise at least one polarity reversal detector (7) and an evaluation unit (8) for the measurement data of the polarity reversal detector (7).

7. Polarity reversal protection means according to Claim 6, **characterized in that** the polarity reversal detector (7) comprises at least one current sensor (9; 17; 22, 25) and/or at least one magnet sensor.

8. Polarity reversal protection means according to Claim 7, **characterized in that** the polarity reversal detector comprises at least one voltage sensor.

9. Polarity reversal protection means according to one of Claims 6 to 8, **characterized in that** the evaluation unit (8) has at least one external signal input (11) by means of which the evaluation of the measurement data of the polarity reversal detector (7) can be influenced in a targeted manner.

10. Polarity reversal protection means according to one of Claims 1 to 9, **characterized in that** at least one signal transmitter for indicating an instance of polarity reversal is provided.

## Revendications

1. Protection contre l'inversion de polarité pour des sources d'énergie, notamment pour des batteries de véhicule automobile, ladite protection étant connectée entre une première source d'énergie et au moins un élément consommateur de courant (3) et/ou au moins un générateur (4), comprenant :
- des moyens de détection permettant de savoir si les deux pôles (1, 2) de la première source d'énergie sont raccordés aux connecteurs correspondants de l'élément consommateur de courant (3) et/ou du générateur (4) ; et
- des moyens de découplage de la première source d'énergie par rapport à l'élément consommateur de courant (3) et/ou au générateur (4) dans un premier cas d'inversion de polarité dans lequel les deux pôles (1, 2) de la première source d'énergie ont été inversés lors du raccordement à l'élément consommateur de courant (3) et/ou au générateur (4) ;
**caractérisée en ce que** :
- un chemin d'inversion de polarité (14) est prévu qui relie entre eux les deux pôles (1, 2) de la première source d'énergie par le biais d'au moins un premier contacteur (12) et d'au moins un fusible (13) ;
- le fusible (13) est disposé dans la liaison prévue entre un des pôles (1, 2) de la première source d'énergie et le connecteur correspondant de l'élément consommateur de courant (3) et/ou du générateur (4) ; et
- le premier contacteur (12) est commandé par les moyens de détection du premier cas d'inversion de polarité, de sorte que le premier contacteur (12) est fermé dans le premier cas d'inversion de polarité et que les deux pôles (1, 2) de la première source d'énergie sont court-circuités, le chemin d'inversion de polarité (14) étant dispersé par le fusible (13) et la première source d'énergie étant découplée de l'élément consommateur de courant (3) et/ou du générateur (4).

2. Protection contre l'inversion de polarité pour des sources d'énergie, notamment pour des batteries de véhicule automobile, ladite protection étant connectée entre une première source d'énergie et au moins un élément consommateur de courant (3) et/ou au moins un générateur (4), selon la revendication 1, **caractérisée par** la présence :
- d'au moins une première borne de raccordement (15) servant à raccorder une source d'énergie supplémentaire et à court-circuiter la première source d'énergie ; et
- de moyens de détection permettant de savoir si oui ou non le pôle de la source d'énergie supplémentaire prévu à cet effet est raccordé à la première borne de raccordement (15) ;
- de moyens de découplage de la source d'énergie supplémentaire dans un deuxième cas d'inversion de polarité dans lequel les deux pôles de la source d'énergie supplémentaire ont été inversés lors du raccordement à la première borne de raccordement (15).

3. Protection contre l'inversion de polarité selon la revendication 2, **caractérisée en ce que** la première borne de raccordement (15) et le pôle (1) correspondant de la première source d'énergie sont reliés par le biais d'au moins un deuxième contacteur (16) et que le deuxième contacteur (16) est commandé par les moyens de détection du deuxième cas d'inversion de polarité, de sorte que le deuxième contacteur (16) est ouvert dans le deuxième cas d'inversion de polarité.

4. Protection contre l'inversion de polarité pour des sources d'énergie, notamment des batteries de véhicule automobile, ladite protection étant connectée entre une première source d'énergie et au moins un élément consommateur de courant (3) et/ou au moins un générateur (4), selon la revendication 1, **caractérisée par** la présence :
- d'une première et d'une deuxième borne de raccordement (20, 23) permettant de raccorder une source d'énergie supplémentaire et de court-circuiter la première source d'énergie ; et
- de moyens de détection de la situation de raccordement, c'est-à-dire de moyens de détection permettant de savoir quel pôle de la source d'énergie supplémentaire est raccordé à laquelle des deux bornes de raccordement (20, 23) ; et
- des moyens d'inversion automatique des première et deuxième bornes de raccordement (20, 23) avec les connecteurs de la première source d'énergie, de sorte que les pôles de la source d'énergie supplémentaire sont reliés dans tous les cas aux pôles (1, 2) correspondants de la première source d'énergie.

5. Protection contre l'inversion de polarité selon la revendication 4, **caractérisée en ce que** les deux bornes de raccordement (20, 23) peuvent respectivement être reliées en alternance à un des deux pôles (1, 2) de la première source d'énergie par le biais d'au moins un contacteur (21, 24) et que ces deux contacteurs (21, 24) sont raccordés par le biais des moyens de détection de la situation de raccordement.

6. Protection contre l'inversion de polarité selon l'une quelconque des revendications 1 à 5, **caractérisée en ce que** les moyens de détection du premier cas d'inversion de polarité, les moyens de détection du deuxième cas d'inversion de polarité et/ou les moyens de détection de la situation de raccordement comprennent au moins un détecteur d'inversion de polarité (7) et une unité d'analyse (8) des données de mesure du détecteur d'inversion de polarité (7).

7. Protection contre l'inversion de polarité selon la revendication 6, **caractérisée en ce que** le détecteur d'inversion de polarité (7) comprend au moins un détecteur de courant (9 ; 17 ; 22, 25) et/ou au moins un détecteur de champ magnétique.

8. Protection contre l'inversion de polarité selon la revendication 7, **caractérisée en ce que** le détecteur d'inversion de polarité comprend au moins un détecteur de tension.

9. Protection contre l'inversion de polarité selon l'une quelconque des revendications 6 à 8, **caractérisée en ce que** l'unité d'analyse (8) comprend au moins une entrée de signaux (11) externe permettant d'influer de façon ciblée sur l'analyse des données de mesure du détecteur d'inversion de polarité (7).

10. Protection contre l'inversion de polarité selon l'une quelconque des revendications 1 à 9, **caractérisée en ce qu'**au moins un émetteur de signaux est prévu pour indiquer un cas d'inversion de polarité.
